(19) Europäisches Patentamt
European Patent Office
Office européen des brevets

(11) **EP 2 170 010 B1**

(12) **EUROPEAN PATENT SPECIFICATION**

(45) Date of publication and mention
of the grant of the patent:
**04.03.2015 Bulletin 2015/10**

(51) Int Cl.:
***H05B 6/06*** *(2006.01)*     ***H05B 6/12*** *(2006.01)*

(21) Application number: **09168259.1**

(22) Date of filing: **20.08.2009**

(54) **Electromagnetic induction heating device**

Elektromagnetische Induktionsheizvorrichtung

Dispositif de chauffage à induction électromagnétique

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **29.09.2008 JP 2008249466**

(43) Date of publication of application:
**31.03.2010 Bulletin 2010/13**

(73) Proprietor: **Hitachi, Ltd.**
**Chiyoda-ku**
**Tokyo 100-8280 (JP)**

(72) Inventors:
• **Shoji, Hiroyuki**
**Chiyoda-ku**
**Tokyo 100-8220 (JP)**
• **Isogai, Masayuki**
**Hitachi-shi**
**Ibaraki (JP)**
• **Okubo, Toshikazu**
**Chiyoda-ku**
**Tokyo 100-8220 (JP)**
• **Uruno, Junpei**
**Chiyoda-ku**
**Tokyo 100-8220 (JP)**

(74) Representative: **Matias, Bruno M.**
**MERH-IP**
**Matias Erny Reichl Hoffmann**
**Paul-Heyse-Strasse 29**
**80336 München (DE)**

(56) References cited:
**FR-A1- 2 657 486     JP-A- 2007 012 482**
**JP-A- 2007 194 228     JP-A- 2007 289 306**
**JP-A- 2007 317 587**

**Description**

BACKGROUND OF THE INVENTION

The present invention relates to an electromagnetic induction heating device of an inverter type which inductively heats heating-target objects of different materials to supply a desired power to one of the heating-target objects.

In these years, electromagnetic induction heating devices of an inverter type for heating heating-target objects including a cooking pan without using fire are increasingly used. The electromagnetic induction heating device heats a heating-target object made of a metal by supplying a high frequency current to an induction coil to induce an eddy current in the heating-target object located in the vicinity of the coil and by using heat generated from the electric resistance of the heating-target object itself based on the eddy current. When the heating-target object is made of iron as a magnetic material having a large intrinsic resistance, it is easy for the object to be heated; whereas, when the object is made of copper or aluminum as a nonmagnetic material having a low intrinsic resistance, it is difficult for the object to be heated.

One of prior arts of solving such a problem is a method of setting the phases of currents to be applied to a plurality of induction coils in antiphase or in phase depending upon the different materials of heating-target objects including a cooking pan to heat heating-target objects at the same level based on mutual inductances between the induction coils regardless of the materials of the heating-target objects, as disclosed in JP-A-2007-12482.

In the case of a cooking pan made of a nonmagnetic aluminum and having a total light weight including cooking contents placed therein, however, application of a large heating power to the pan causes a large repulsion force to be generated between the pan and the induction coils, thus generating such a phenomenon that the pan is lifted or moved.

In order to solve such a problem, there is suggested, when a lift force in a cooking pan is detected, a method of reducing a heating power as disclosed in JP-A-2004-165127, or a method of suppressing a lift force in a cooking pan by locating a nonmagnetic metallic plate between a cooking pan and induction coils to heat the nonmagnetic metallic plate and to reduce a repulsion force generated between the pan and the induction coils as disclosed in JP-A-2004-273301.

In JP 2007 194 228 A an electromagnetic induction heating device is provided with a heating coil which conducts an induction-heating of a workpiece, a power source circuit which generates a direct current and an inverter which converts the direct current into a power to supply the above heating coil. The heating coil has an outer winding wire arranged outside, an intermediate winding wire arranged inside the outer winding wire and an inner winding wire arranged inside the intermediate winding wire. In case the above workpiece is iron, the iron workpiece is heated by the outer winding wire and the inner winding wire.

In JP 2007 289 306 A a high frequency current is supplied to a bottom outside heating coil and a bottom inside heating coil by a bottom inverter circuit, the bottom outer periphery of the pot housed inside a rice cooker main body is heated by the bottom outside heating coil, and the bottom inner periphery of the pot is heated by the bottom inside heating coil.; The bottom outside heating coil is arranged at a position higher than the bottom inside heating coil, a distance between the inner peripheral part of the bottom outside heating coil and the outer peripheral part of the bottom inside heating coil is made larger than a distance between the bottom outside heating coil and the pot or a distance between the bottom inside heating coil and the pot, and the bottom outside heating coil and the bottom inside heating coil are serially connected and are also connected so that the flowing directions of the high frequency current flowing to the bottom outside heating coil and the high frequency current flowing to the bottom inside heating coil become opposed.

JP 2007 317587 A discloses an electromagnetic induction heating device according to the preamble of claim 1.

SUMMARY OF THE INVENTION

In JP-A-2007-12482, when the heating-target object is made of a magnetic material, the phases of currents to be applied to the induction coils are set to be opposite to cause currents to easily flow through the induction coils. When the heating-target object is made of a nonmagnetic material, the phases of the currents flowing through the induction coils are set to be the same to suppress the currents flowing through the induction coils. As a result, the values of the currents flowing through the induction coils are set to be nearly the same regardless of the different materials of the heating-target objects, thus failing to contribute to suppressing a repulsion force generated between the heating-target object and the coils.

In JP-A-2004-165127, there may occur such a case that a heating power necessary for cooling cannot be obtained. For example, in the case a light-weighted cooking pan or frying pan, the pan can be easily lifted due to a repulsion force, and when cooking materials contained in the pan are placed to be localized, the pan may undesirably be unbalanced and moved onto an electromagnetic induction heating plate. When such a lift force is detected and a heating power is decreased for the purpose of preventing such a problem, there may occur such a case that a sufficient cooling power for cooking cannot be obtained or boiling cannot be obtained.

In JP-A-2004-273301, though the repulsion generated to the heating-target object can be reduced, the non-

EP 2 170 010 B1

magnetic metallic plate is heated and a glass surface is heated. Thus there occur such a case that some of the cooking materials overflowed from the pan scorch and stick to the pan or the user may get burnt since the glass surface after completion of the cooking has a high temperature.

In view of the above problems in the prior art, there is therefore provided an object of the present invention to provide an electromagnetic induction heating device of an inverter type which can efficiently supply a desired power to each of heating-target objects made of different materials and can reduce a lift force acting, in particular, on a heating-target object made of aluminum as a nonmagnetic material.

In accordance with the present invention, there is provided an electromagnetic induction heating device including an inverter which has first and second upper/lower arms each having two main switching elements connected in series and which converts a DC voltage to an AC voltage and supplies the AC voltage to induction coils for inductively heat a heating-target object. The electromagnetic induction heating device comprising:

> first inverter control means for operating the inverter as a half bridge type inverter by driving the switching elements of the first upper/lower arm;
> second inverter control means for operating the inverter as a half bridge type inverter by driving the switching elements of the second upper/lower arm;
> third inverter control means for operating the inverter as a full bridge type inverter by driving the switching elements of the first and second upper/lower arms;
> a first resonance load circuit made up of a first induction coil and a first resonance capacitor, the first resonance load circuit being connected between output terminals of the half bridge type inverter including the first upper/lower arm;
> a second resonance load circuit made up of a second induction coil and a second resonance capacitor, the second resonance load circuit being connected between output terminals of the half bridge type inverter including the second upper/lower arm;
> a third resonance load circuit made up of at least part of the firs and second resonance load circuits and a third resonance capacitor, the third resonance load circuit being connected between output terminals of the full bridge type inverter including the first and second upper/lower arms; and
> switch means for connecting or disconnecting the third resonance load circuit to or from the inverter.

The "half bridge type inverter" as used herein means an inverter which supplies an AC power to a load basically by turning ON or OFF the switching elements of the first upper/lower arm.

In accordance with an aspect of the present invention, the first and second induction coils are located on nearly the same plane, the electromagnetic induction heating device further comprising magnetic coupling suppressing means for suppressing magnetic coupling between the induction coils and a driving unit for driving the first and second upper/lower arms in such a manner that the currents of the first and second induction coils have a phase difference of $\pi/2$.

In accordance with a further aspect of the present invention, optimum inverter voltage, driving frequency and coil current can be set even under conditions of large load variations, and desired powers can be efficiently supplied to loads. Further, when a phase difference is given to the currents of the two induction coils, a lift force acting on a heating-target object made of, in particular, a nonmagnetic material such as aluminum can be reduced.

BRIEF DESCRIPTION OF THE DRAWINGS

FIG. 1 shows a circuit configuration of an electromagnetic induction heating device in accordance with an embodiment 1;
FIG. 2 is a plan view of induction coils in the embodiment 1;
FIG. 3 shows a perspective view of a cross-sectional view of the induction coils in the embodiment 1;
FIG. 4 shows diagraphs for analyzing a phase-difference-zero current in the induction coil, and an eddy current loss, and a lift force in the embodiment 1;
FIG. 5 shows diagraphs for analyzing a phase-difference-$\pi/2$ current in the induction coil, and an eddy current loss, and a lift force in the embodiment 1;
FIG. 6 shows waveforms of signals for explaining the operation of the electromagnetic induction heating device of the embodiment 1;
FIG. 7 shows waveforms of signal for explaining the operation of the electromagnetic induction heating device of the embodiment 1;
FIG. 8 is a circuit configuration of an electromagnetic induction heating device in accordance with an embodiment 2;
FIG. 9 is a circuit configuration of an electromagnetic induction heating device in accordance with an embodiment 3;

3

FIG. 10 is a circuit configuration of an electromagnetic induction heating device in accordance with an embodiment 4;
FIG. 11 shows waveforms of signals for explaining the operation of the electromagnetic induction heating device of the embodiment 4;
FIG. 12 shows waveforms of signals for explaining the operation of the electromagnetic induction heating device of the embodiment 4;
FIG. 13 is a circuit configuration of an electromagnetic induction heating device in accordance with an embodiment 5;
FIG. 14 is a circuit configuration of an electromagnetic induction heating device in accordance with an embodiment 6;
FIG. 15 is a circuit configuration of an electromagnetic induction heating device in accordance with an embodiment 6;
FIG. 16 is a circuit configuration of an electromagnetic induction heating device in accordance with an embodiment 6;
FIG. 17 is a circuit configuration of an electromagnetic induction heating device in accordance with an embodiment 7;
FIG. 18 is a circuit configuration of an electromagnetic induction heating device in accordance with an embodiment 8;
FIG. 19 is a circuit configuration of an electromagnetic induction heating device in accordance with an embodiment 9; and
FIG. 20 is a circuit configuration of an electromagnetic induction heating device in accordance with an embodiment 10.

DESCRIPTION OF THE EMBODIMENTS

Preferable embodiments of the present invention will be explained with reference to the attached drawings.

Embodiment 1:

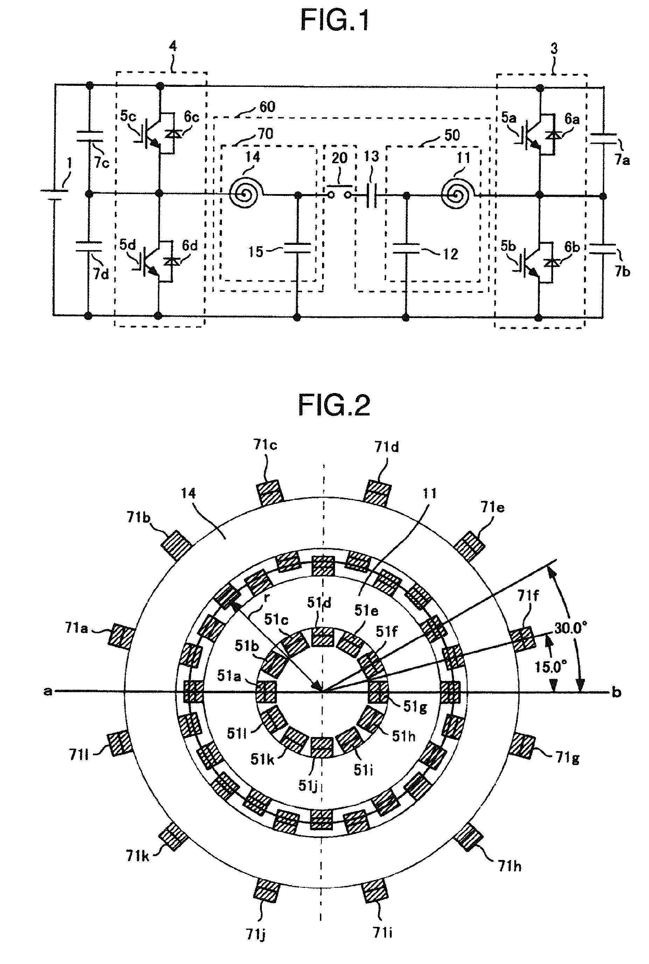

FIG. 1 is a circuit configuration of an electromagnetic induction heating device in accordance with an embodiment 1. The present embodiment is arranged to convert a DC power to an AC power and to supply an AC current having a high frequency to induction coils to inductively heat a heating-target object made of a metallic material. Though the heating-target object is not illustrated, induction coils 11, 14 are magnetically coupled to each other o supply a power to the heating-target object. In FIG. 1, a first upper/lower arm 3 having power semiconductor switching elements 5a, 5b connected in series and a second upper/lower arm 4 having power semiconductor switching elements 5c, 5d are connected between positive and negative electrodes of a DC power source 1. Diodes 6a to 6d are connected in inverse parallel in polarity to switching elements 5a to 5d respectively; whereas snubber capacitors 7a to 7d are connected in inverse parallel in polarity to the switching elements 5a to 5d respectively. The snubber capacitors 7a, 7b are charged or discharged with a cut-off current when the switching elements 5a, 5b are turned OFF to thereby suppress variations in voltages applied to the both switching elements, thus suppressing a turn-OFF loss. Similarly, the snubber capacitors 7c, 7d also suppresses variations in voltages applied to the switching elements 5c, 5d and to suppress a turn-OFF loss. One end of a first induction coil 11 is connected to an output terminal of the first upper/lower arm 3, and a first resonance capacitor 12 is connected between the other end of the first induction coil 11 and the negative electrode of the DC power source 1, thus forming a first resonance load circuit 50. One end of a second induction coil 14 is connected to an output terminal of the second upper/lower arm 4, and a second resonance capacitor 15 is connected between the other end of the second induction coil 14 and the negative electrode of the DC power source 1, thus forming a second resonance load circuit 70. A third resonance capacitor 13 and a relay 20 connected in series are connected to the other end of the first induction coil 11 and to the other end of the second induction coil 14. With such an arrangement, turning off the relay 20 causes the third resonance capacitor 13 to be disconnected. The first and second resonance load circuits 50, 70 form a third resonance load circuit 60. Since the relay 20 is switched according to the material of the heating-target object or according to a set heating power, the first resonance load circuit 50, the second resonance load circuit 70, or the third resonance load circuit 60 can be selected to heat the heating-target object.

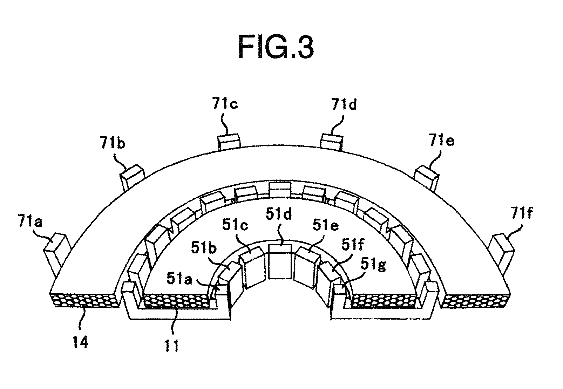

FIG. 2 shows a top view of the first and second induction coils 11, 14, and FIG. 3 shows a perspective cross-sectional view of the induction coils of FIG. 2 taken along a line ab. The first and second induction coils 11, 14 are arranged inside and outside in nearly the same plane to form concentric circles respectively as shown in FIGS. 2 and 3. The induction coil 11 is provided on U-shaped magnetic materials 51a to 511 arranged radially from the center of the coil, and the second induction coil 14 is also provided on U-Shaped magnetic materials 71a to 711. These magnetic materials are arranged to face the inner peripheral, bottom and outer peripheral surfaces of the induction coils. As a result, the magnetic materials forms a magnetic coupling suppressing means for suppressing leakage magnetic fields in directions of coil bottom and side surfaces. and guiding the magnetic fields in a coil upper surface direction, that is, in a direction toward the cooking pan as the heating-target object. In order to suppress magnetic coupling between the induction coils 11, 14, the magnetic materials 51a to 511 and 71a to 711 are provided. In order to suppress magnetic coupling between the induction coils 11, 14, it is preferable to make a gap between the two coils wide. Meanwhile, in order to increase the number of turns of each of the induction coils and to reduce currents with a limited outer diameter dimension, it becomes necessary to narrow a distance between the coils. To this end, in the present embodiment, the inside magnetic materials 51a to 51d are arranged so that the magnetic materials form each an arc angle of 30 degrees, and the outside U-Shaped magnetic materials 71a to 71l are arranged to be shifted by an angle of 15 degrees from the inside U-shaped magnetic materials 51a to 51l. As a result, outer upright parts of the U-shaped magnetic materials 51a to 51l and inner upright parts of the U-Shaped magnetic materials 71a to 71l are located at positions spaced by a nearly the same distance r from the center of the coils, whereby the gap between the induction coils 11 and 14 can be made small and an increased number of turns can be secured with a limited space.

In FIG. 1, the heating-target object (not shown) is magnetically coupled with the induction coils 11, 14. Thus, when the heating-target object is converted to an equivalent circuit as viewed from the side of the induction coils 11, 14, the heating-target object is expressed by a series circuit of an equivalent resistance and an equivalent inductance connected in series. The equivalent resistance and the equivalent inductance vary with the material of the heating-target object. When the heating-target object is made of a nonmagnetic material having a low resistance such as copper or aluminum, the equivalent resistance and the equivalent inductance become both small. When the heating-target object is made of a magnetic material having a high resistance, both of the equivalent resistance and inductance becomes large.

In the present embodiment, when the heating-target object is made of copper or aluminum, the relay 20 is turned OFF to supply a high frequency current to the inside induction coil 11 in an inverter of a SEPP (Single Ended Push-Pull) type formed as the resonance load circuit 50 including the first upper/lower arm 3 and the induction coil 11 and to supply a high frequency current to the outside second induction coil 14 in an inverter of the SEPP type formed as the resonance load circuit 70 including the second upper/lower arm 4 and the second induction coil 14 to heat the heating-target object. The SEPP type is a sort of half bridge type. As mentioned above, since the heating-target object made of the nonmagnetic material has a small equivalent resistance and a current tends to easily flow through the object, the SEPP type can be employed as the inverter to supply a sufficient current even when a voltage applied to the first and second resonance load circuits 50, 70 is lowered. The first and second upper/lower arms 3, 4 supply high frequency currents to the induction coils 11, 14 with a predetermined phase difference therebetween. The skin resistance of the heating-target object is, as a feature, proportional to a square root of frequency. Thus when it is desired to heat a heating-target object made of copper or aluminum having a low resistance, it is effective to set the frequency at a high value. Accordingly, the capacitances of the first and second resonance capacitors 12, 15 are set so that the first and second upper/lower arms 3, 4 can be driven, e.g., with a frequency of about 90kHz.

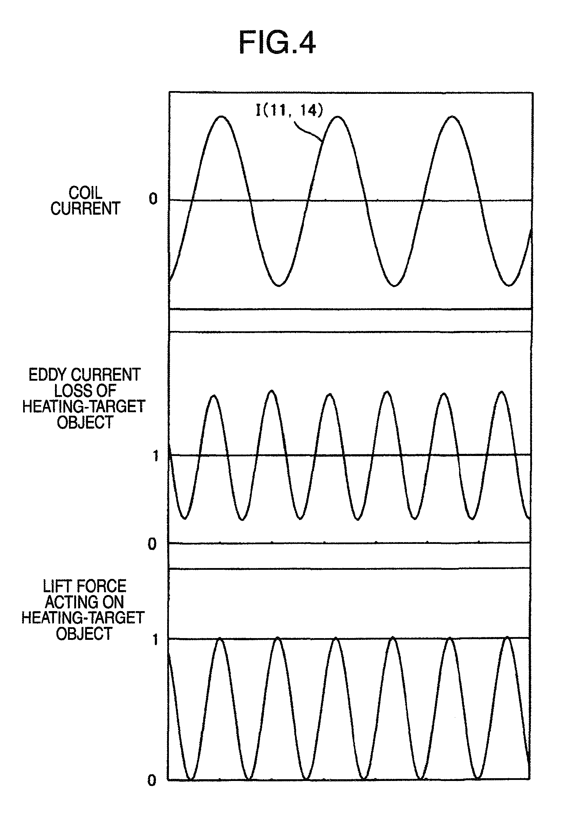

Explanation will next be made as to currents flowing through the first and second induction coils 11, 14, an eddy current loss of the heating-target object, and a lift force acting on the heating-target object. FIG. 4 shows an analysis result of an eddy current loss and a lift force when in-phase currents are supplied to the induction coils 11, 14. The eddy current loss and the lift force are generated when a magnetic flux generated from the induction coils varies. Thus, the eddy current loss and the lift force have always positive values regardless of the current sense, are both increased when the magnetic flux largely varies and decreased when the variation of magnetic flux is small. In this case, since the effective value of the eddy current loss of the heating-target object or the effective value of an amount of generated heat is important, the lift force is not influenced by the phases of the currents. However, since the larger momentary lift force is the more the heating-target object is lifted or moved, the lift force is influenced by the current phases. Accordingly, when the currents of the first and second induction coils are in phase, that is, when a current phase difference therebetween is zero as shown in FIG. 4, a lift force acting on the heating-target object is twice a lift force generated by the current of the single induction coil and has a maximum value. As a result the user feels as if the heating-target object were lifted.

Examination will be made as to such a phase difference as to cause a lift force to have a minimum value. When n denotes the number of turns of each of the induction coils 11, 14, I denotes a current, and $\phi$ denotes a current phase difference; a lift force F can be expressed by an equation (1) as follows.

$$F \propto |nI\sin\omega t| + |nI\sin(\omega t + \phi)| \qquad \dots (1)$$

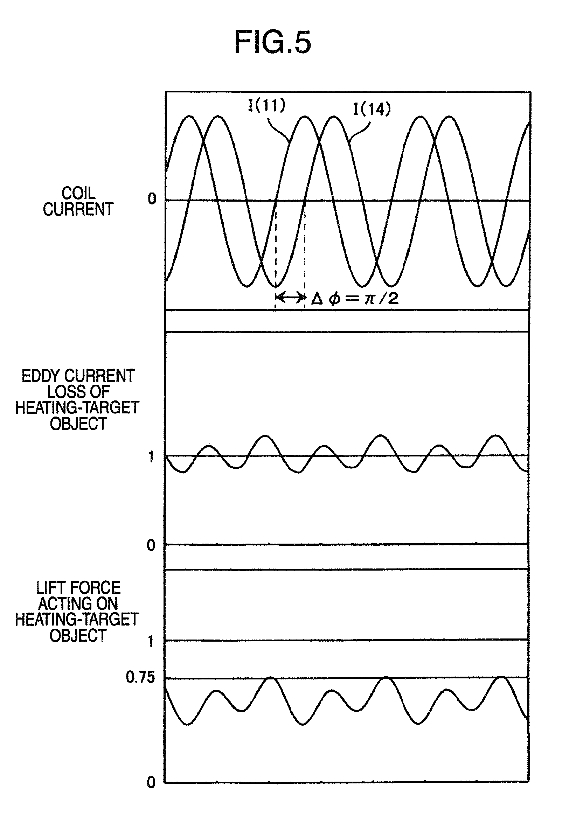

In the equation (1), finding $\phi$ for a minimum value of F results in $\pi/2$ (rad). FIG. 5 shows an analysis result of an eddy current loss and a lift force when currents are supplied to the induction coils 11, 14 with a phase difference of $\pi/2$ (rad). It will be seen from FIG. 5 that the effective value of the eddy current loss is the same as when the currents are in phase, but the momentary maximum value of the lift force is reduced when compared with the case of the in-phase currents.

The equation (1) expresses a lift force F when the numbers of turns of the first and second induction coils are the same and currents thereof are the same. However, it is not always required that the coil turn numbers be the same. When $n_1$ denotes the number of turns of the first induction coil, $I_1$ denotes a current flowing through the first induction coil, $n_2$ denotes the number of turns of the second induction coil, and $I_2$ denotes a current flowing through the second induction coil; setting of the respective quantities so as to satisfy an equation (2), a lift force F is written as an equation (3).

$$n1 \times I1 = n2 \times I2 \qquad \qquad \dots (2)$$

$$F \propto |n1I1\sin\omega t| + |n2I2\sin(\omega t + \phi)| \quad \dots (3)$$

Even in the equation (3), since F has a minimum value when $\phi$ is $\pi/2$ (rad). Hence setting of $\phi$ at $\pi/2$ (rad) can result in acquisition of effects equivalent to those explained in FIG. 5.

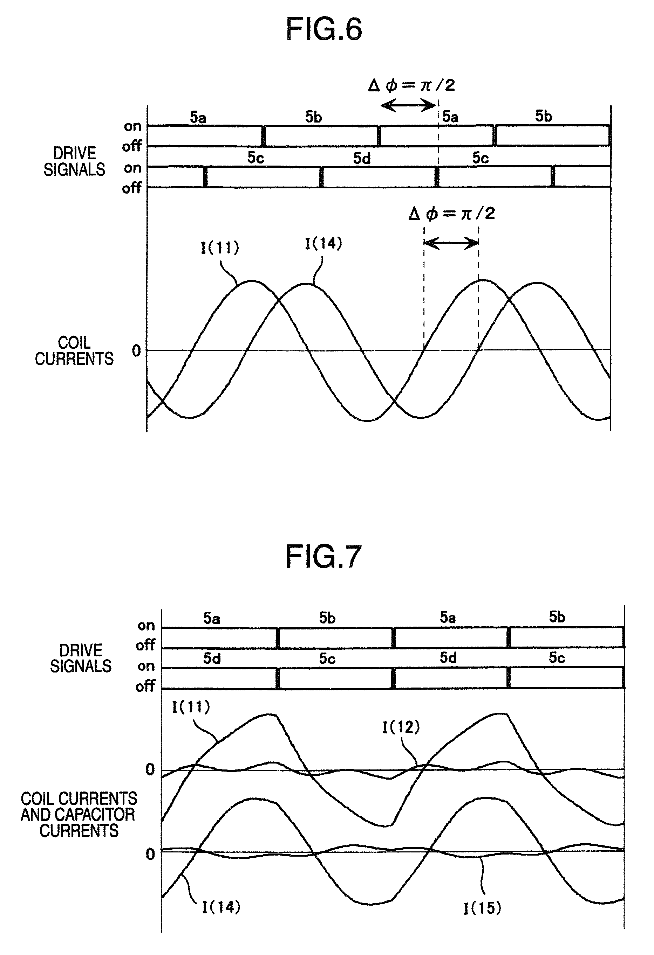

FIG. 6 shows drive signals of the first and second upper/lower arms 3, 4 when currents are supplied to the induction coils 11, 14 with a phase difference of $\pi/2$ (rad) therebetween in the present embodiment. In the drawing, the switching elements 5a, 5b of the upper/lower arm 3 are complementarily driven with a predetermined dead time. Similarly, the switching elements 5c, 5d of the upper/lower arm 4 are complementarily driven. Since the phase difference of $\pi/2$ (rad) is provided to the currents of the upper/lower arms 3, 4, a phase difference of $\pi/2$ (rad) can be provided to the currents of the induction coils 11, 14 as in currents I(11), I(14) of the drawing.

In the present embodiment, when two of the induction coils are provided and a phase difference between the coil currents is set at $\pi/2$ (rad) in this way, a momentary maximum value of the lift force of the heating-target object can be reduced and thus the lift force of the heating-target object can be suppressed. Further, since the lift force collapses the balance of the heating-target object and a momentary maximum value of even a limit value (a maximum of a static frictional force) is reduced, even movement of the heating-target object can be suppressed for a power applied the heating-target object by applying the present invention. Further, even when the movement is started, a movement distance becomes short because the momentary maximum of the lift force is reduced. From these viewpoints, when a power equivalent to that in the prior art is applied to the heating-target object, a lift force or a movement in the heating-target object is applied to the heating-target object, the lift force or movement in the heating-target object is suppressed. As a result, there can be provided an electromagnetic induction heating device which is highly convenient for the user. When the lift force or movement of the heating-target object is allowed as far as a level similar to that of the prior art, a power higher than in the prior art can be applied to the heating-target object and thus the present invention can cope even with cooking requiring a large cooking power. Further, since the induction coil is divided into two sections, an eddy current loss generated in the heating-target object can be widely distributed to two inside and outside locations and the heating-target object can advantageously be evenly heated when compared with use of the single coil.

In the present embodiment, when the heating-target object is made of iron, the object is heated by turning ON the relay 20 to supply high frequency currents to the inside and outside induction coils 11 and 14 in the inverter of the full bridge type formed as the third resonance load circuit 60 including the first and second upper/lower arms 3, 4 and the induction coils 11, 14. As mentioned above, since the heating-target object made of a magnetic material having a high resistance has a large equivalent resistance, it is difficult for a current to flow through the resonance load circuit. Thus when the inverter is changed to the full bridge type, the output voltage of the inverter can be increased doubly to obtain a desired output. When the heating-target object is made of such copper or aluminum as mentioned above, the frequency of the inverter is set at about 90kHz to increase its skin resistance because the object has a small resistance. When the heating-target object is made of iron, however, the object has originally a large resistance and therefore the first and second upper/lower arms are driven with a frequency of about 20kHz. As mentioned above, the capacitances of the first and second resonance capacitors 12, 15 are set according to the driving frequency of about 90kHz, but the capacitance of the third resonance capacitor 13 is set according to a driving frequency of about 90kHz. Since the driving frequency is largely different, the capacitance of the third resonance capacitor 13 has a value sufficiently larger than those of the first and second resonance capacitors 12, 15. Hence, the resonance frequency of the full bridge type of inverter is set mainly according to the third resonance capacitor 13. In the operation of the full bridge type inverter, since a current flowing through the third resonance capacitor 13 is large, this causes no big problem even under a condition when the resonance capacitors 12, 15 are connected. In this way, even when the two induction coils are provided, mere turning ON the single relay 20 can cause the inverter to be switched to the full bridge type at the same time when the resonance frequency is switched. Since the relay is switched according to the material or shape of the heating-target object or to the set cooking power, heating can be obtained with the inverter type and driving frequency suitable for a load condition.

FIG. 7 shows drive signals of the first and second upper/lower arms 3, 4 when the inverter is driven with the full bridge type. In the drawing, the switching elements 5a, 5b of the upper/lower arm 3 are complementarily driven with a predetermined dead time, and similarly the switching elements 5c, 5d of the upper/lower arm 4 are complementarily driven. Nearly in-phase currents I (11) and I(14) flow through the induction coils 11, 14, and currents I (12) and I (15) having frequencies higher than the driving frequency flow through the first and second resonance capacitors 12, 15. Since the currents are low in value, this does not largely influence the induction heating of the heating-target object. Since the currents of the first and second induction coils 11, 14 are in phase, a lift force acting on the heating-target object as mentioned above has a maximum value. However, since the iron cooking pan of the magnetic material is heavier than the aluminum cooking pan of the nonmagnetic, material, the cooking pan is less influenced by the lift force. When the cooking pan has a multilayered structure having an aluminum layer sandwiched by magnetic material layer, the heating-target object may be influenced, in some cases, by the lift force depending upon the driving frequency. To avoid this, it is desirable to switch to a method of turning OFF the relay 20 to provide a current phase difference to the two induction coils for heating the object as mentioned above.

Embodiment 2:

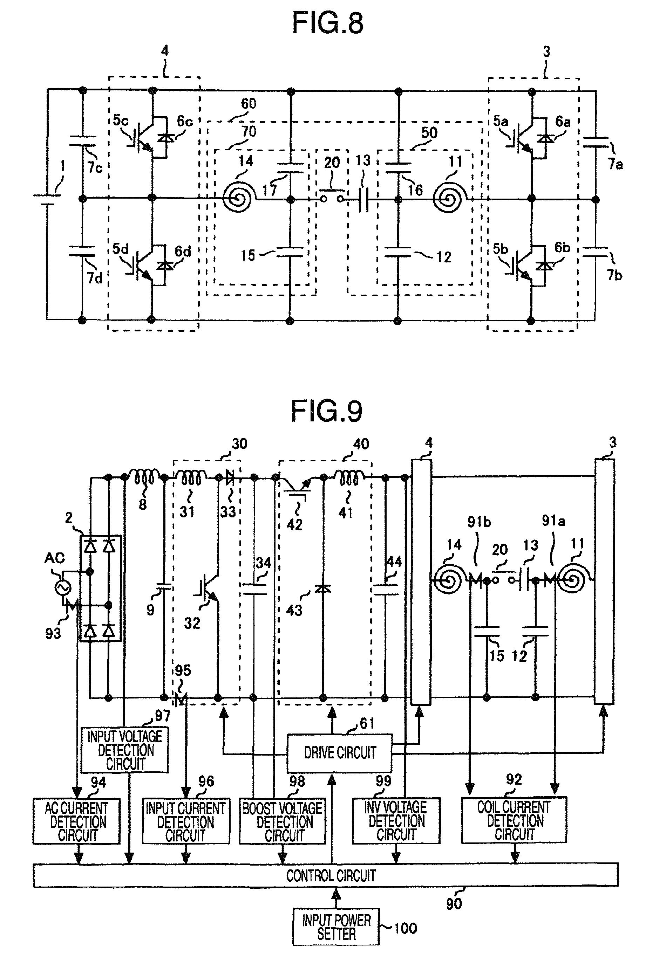

FIG. 8 shows a circuit configuration of an electromagnetic induction heating device in accordance with an embodiment 2. In FIG. 8, constituent elements having the same functions as those shown in FIG. 1 are denoted by the same reference numerals or symbols, and explanation thereof is omitted. In FIG. 8, one end of the induction coil 11 is connected to an output terminal of the first upper/lower arm 3, and a fourth resonance capacitor 16 is connected between the other end of the induction coil and the positive electrode of the DC power source 1. One end of the induction coil 14 is connected to an output terminal of the second upper/lower arm 4, and a fifth resonance capacitor 17 is connected between the other end of the induction coil and the positive electrode of the DC power source 1. When the heating-target object is made of copper or aluminum, the relay 20 is turned OFF to cause an inverter of a half bridge type including the upper/lower arm 3, the induction coil 11, and first and fourth resonance capacitors 12, 16 to supply a high frequency current to the inside induction coil 11 and also to cause an inverter of a half bridge type including the second upper/lower arm 4, the induction coil 14, and second and fifth resonance capacitors 15, 17 to supply a high frequency current to the outside induction coil 14, thus heating the heating-target object. As mentioned above, when it is desired to heat a heating-target object having a low resistance, the first and second upper/lower arms 3, 4 supply a high frequency current to the heating-target object with a predetermined phase difference provided between the induction coil 11 and the induction coil 14. Since it is effective to increase the frequency, the capacitances of the first, second, fourth, and fifth resonance capacitors 12, 15, 16, 17 are set so that the first upper/lower arm 3 can be driven with a frequency of, e.g., 90kHz. The embodiment 1 is an SEPP type, so that the inverter causes a current to be supplied from the DC power source 1 in a condition when upper one of the upper/lower arms is conducted. Since the present embodiment is a half bridge type, the inverter causes a current to be supplied from the DC power source 1 in a condition when any of the switching elements in the upper/lower arm is conducted. Accordingly, current ripples in the DC power source 1 can be reduced. When the heating-target object is made of iron, the relay 20 is turned ON to cause the inverter of the full bridge type formed as the third resonance load circuit 60 including the first and second upper/lower arms 3, 4 and the induction coils 11, 14 to supply a high frequency current to the outside induction coil 14, thus heating the heating-target object.

Embodiment 3:

FIG. 9 shows a circuit configuration of an electromagnetic induction heating device in accordance with an embodiment 3. In the drawing, constituent elements having the same functions as those shown in FIG. 1 are denoted by the same reference numerals or symbols, and explanation thereof is omitted. In the foregoing embodiment, a power to be supplied to the heating-target object can be adjusted by controlling the driving frequencies of the upper/lower arms 3, 4 or the voltage of the DC power source 1. In the present embodiment, the DC power source is shown as a power supply circuit which obtains a DC voltage from a commercial AC power source. In FIG. 9, a voltage of a commercial AC power source AC is applied to a diode rectification circuit 2, sent to a filter including an inductance 8 and a capacitor 9, and then applied to a boost converter circuit 30. The boost converter circuit 30 includes an inductor 31, a switching element 32, and a diode 33. When the switching element 32 is in its ON period, the voltage of the commercial AC power source is applied to the inductor 31 to accumulate an energy therein. When the switching element is in its OFF period, the energy is discharged through the diode 33 into a smoothing capacitor 34. In order to reduce a harmonic components included in an input current of the commercial AC power source, an output voltage across a capacitor 34 is controlled while controlling the ON period of the switching element 32 so that the input current has a sinusoidal waveform. In this case, when a heating-target object made of copper or aluminum having a low resistance is heated, the object has a small equivalent resistance as mentioned above, for which reason it is required to increase the number of turns of the induction coils or to increase the equivalent resistance based on the increased current frequency. However, since the shape of the heating-target object or the usable frequency band is restricted, it has a limit in doing so. The Q value (indicating the sharpness of resonance) of a series resonance circuit including the induction coil and the resonance capacitor is varied with the equivalent resistance, so that the Q value is large and a current flowing through the resonance capacitor is also large when the equivalent resistance is small. In a current resonance type of inverter in which a current flowing through the resonance circuit has a sinusoidal waveform as in the present embodiment, when the driving frequency is set to be higher than the resonance frequency, the resonance current can be limited. A large difference between the resonance frequency and the driving frequency causes a phase difference between the output voltage of the inverter and the resonance current to be large, with the result that the cut-off current of the upper/lower arm becomes large, thus increasing a switching loss. Accordingly, it is desirable to make the cut-off current small by driving the inverter with a frequency close to the resonance frequency, and to limit the resonance current by lowering the DC voltage. In the present embodiment, the aforementioned boost converter circuit 30 is provided for the purpose of reducing harmonic components in the input current and smoothing the input current, so that the value of a lower limit of the voltage across the capacitor 34 is higher than a peak value of the commercial AC power source. In this case, when a buck converter circuit 40 including an inductor 41, a switching element 42, and a diode 43 is provided as shown in FIG. 9, the DC voltage can be lowered and the resonance current can be restricted. A voltage across a capacitor 44 can be varied by controlling the ON-time duty of the switching element 42. Thus, the voltage variation enables power control.

Explanation will then be made as to voltage/current detection necessary for controlling each switching element in the present embodiment.

In order to detect a power applied from the AC power source AC or the material of a heating-target object, it is required to detect an AC current flowing from the AC power source AC. In the present embodiment, the AC current flowing from the AC power source AC is converted to a voltage by a current sensor 93 and then the converted voltage is detected by an AC current detection circuit 94.

For the purpose of correcting a power factor by shaping the waveform of the AC current according to the voltage of the AC power source AC, a signal as a reference of the current waveform is required. In general, an output voltage of a diode bridge, that is, a rectified DC voltage is detected. In the present embodiment, an input voltage detection circuit 97 detects a voltage appearing between DC current output terminals of the diode rectification circuit 2. In order to reduce the number of necessary components, it is also possible to find a reference waveform within the control circuit while avoiding detection of the input voltage and to shape the waveform of the AC current. In this case, the input voltage detection circuit 97 can be removed. The waveform shaping of the AC current can be attained by controlling the waveform of a current flowing through the inductor 31 for the boost converter. In the present embodiment, the current flowing through the inductor 31 is converted to a voltage by a current sensor 95 and the converted voltage is detected by an input current detection circuit 96. The waveform shaping of the AC current can also be attained by detecting a current flowing through the switching element 32 without detecting a current flowing through the inductor 31. In this case, it is only required to change the position of the current sensor 95 without any problem. Further, control of an output of the boost converter circuit 30 requires detection of the output voltage of the converter circuit for feedback control. In the present embodiment, a voltage across the capacitor 34 is detected by a boost voltage detection circuit 98.

In order to control an input power or the material and condition of a heating-target object, it is necessary to detect a current flowing through the induction coil. In the present embodiment, currents flowing through the induction coils 11, 14 are converted to voltages by current sensors 91a, 91b respectively, and then the converted voltages are detected by a coil current detection circuit 92.

In order to control the output power of a load, it is necessary to detect the output voltage of the converter circuit, that is, the power voltage of the inverter for feedback control. In the present embodiment, a voltage across the capacitor 44 is detected by an INV voltage detection circuit 99. A control circuit 90 generates a drive signal for each switching element on the basis of a detection value of each detection circuit and a power command value from an input power setter 100. Each switching element is driven by a drive circuit 61 on the basis of a control signal given from the control circuit 90.

In the present embodiment, since the two induction coils are provided, the material of a heating-target object, the size of the object for the coil shape, etc. can be detected with use of the inside or outside induction coil or the both. For example, when the heating is started, the heating-target object can be detected more accurately than a prior art detection method using a single induction coil, by first driving only one of the two upper/lower arms to detect the current of the induction coil and the AC current, and then detecting driving only the other upper/lower arm to similarly detect the current of the induction coil and the AC current and identifying the material or size of the heating-target object on the basis of the both detected results. When the heating-target object is as small as a cooking pan having a small diameter, currents are supplied only to the induction coil located inside to obtain electromagnetic induction heating, in which case the heating-target object can be efficiently heated under conditions suitable for the size of the object. Further, When a heating-target object made of aluminum or the like as a nonmagnetic material is heated, a voltage as high as several kV is induced across the induction coil, the prior art method of supplying a power to the object with use of the single induction coil has a limit. In the present embodiment, however, since the two induction coils are used, it is possible to reduce the coil voltage. For this reason, a power can be easily increased over the prior art together with a combination with the aforementioned lift force reducing effect.

Embodiment 4:

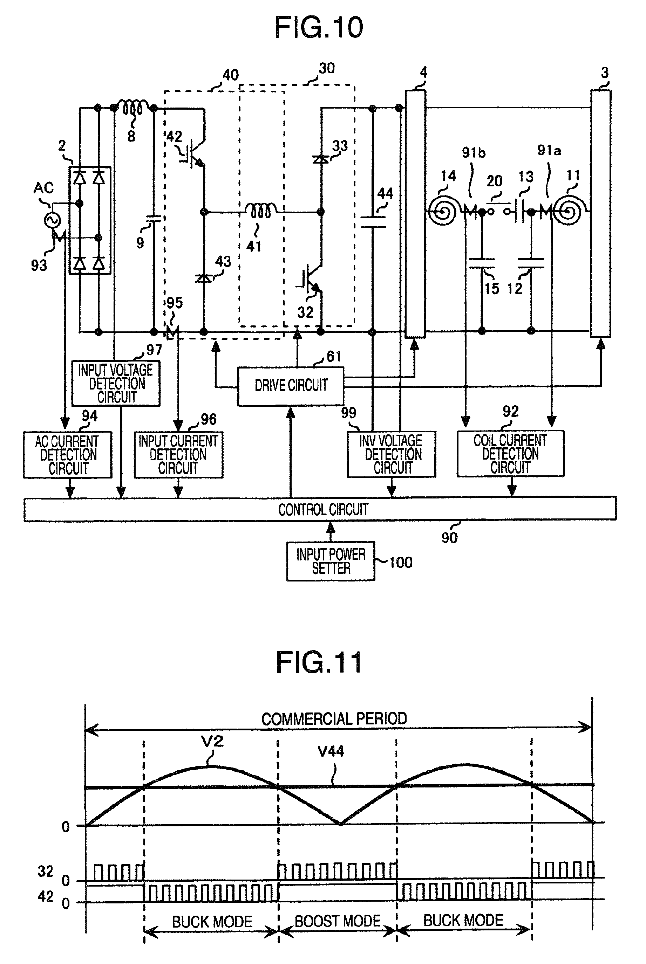

FIG. 10 shows a circuit configuration of an electromagnetic induction heating device in accordance with an embodiment 4. In the drawing, constituent elements having the same functions as those shown in FIG. 9 are denoted by the same reference numerals or symbols, and explanation thereof is omitted. In FIG. 10, the voltage of the commercial AC power source AC is applied to the diode rectification circuit 2 to be subjected to full-wave rectification, and then applied to an H bridge converter including the buck converter circuit 40 and the boost converter circuit 30 via the filter including the inductance 8 and the capacitor 9. The buck converter circuit 40 includes the inductor 41, the switching element 42, and the diode 43; whereas, the boost converter circuit 30 includes the inductor 41, the switching element 32, and the diode 33. The voltage/current detection portion necessary for controlling each switching element in the present embodiment is nearly the same as in the foregoing embodiment 3. However, since the H bridge converter directly converts the DC voltage of the capacitor 9 to an inverter voltage, the boost voltage detection circuit 98 in FIG. 9 can be removed. Further, the current sensor 95 necessary to shape the waveform of the AC current is located between the capacitor 9 and the buck converter circuit 40.

Explanation will next be made as to how to control the boost converter circuit 30 and the buck converter circuit 40 in the present embodiment. The switching elements 32, 42 act as switching elements for buck, boost, and buck boost converters, and controls power factor correction and the output voltage to shape the waveform of the input current according to the voltage of the AC power source AC.

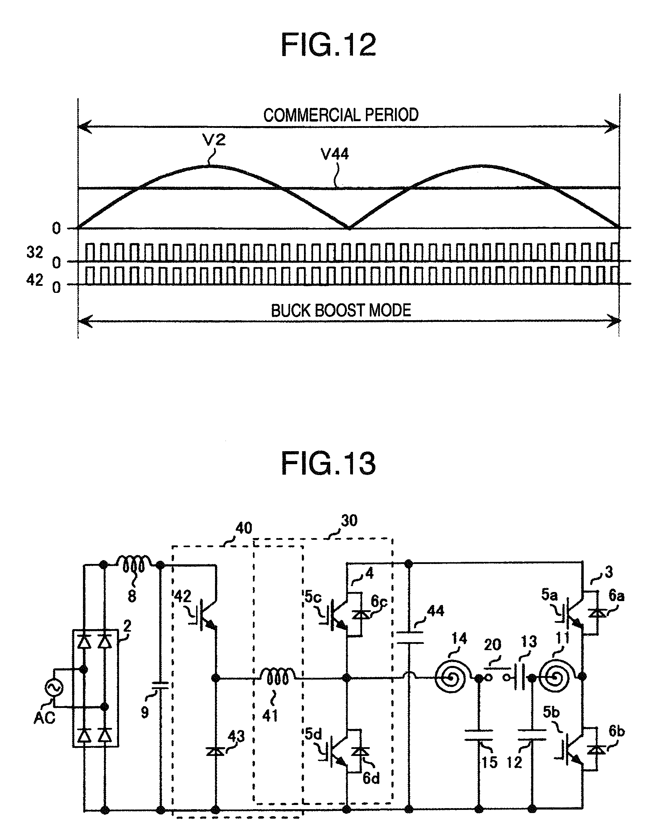

FIGS. 11 and 12 show how to control the switching elements 32, 42. In FIGS. 11 and 12, a DC output voltage of the diode rectification circuit 2 is denoted by V2 and a voltage of the capacitor 44 is denoted by V44. In FIG. 11, first, when V2 is higher than V44, the switching element 32 is put in its OFF state, so that converter operation in the buck mode can be attained by turning ON and OFF the switching element 42. Conversely, when V2 is lower than V44, converter operation in the boost mode can be obtained by controlling turning ON and OFF of the switching element 32 and putting the switching element 42 in its ON state. When the converter operation is switched according to a change in the DC output voltage of the diode rectification circuit 2, that is, a change in the voltage within the period of commercial power source, a frequency of switching operation of each switching element can be reduced and a switching loss can be reduced. In FIG. 12, when the switching elements 32, 42 are controllably turned ON and OFF simultaneously regardless of a change in the voltage within the period of commercial power source. Converter operation in the buck boost mode can be obtained

Embodiment 5:

FIG. 13 shows a circuit configuration of an electromagnetic induction heating device in accordance with an embodiment 5. In the drawing, constituent elements having the same functions as those shown in FIG. 10 are denoted by the same reference numerals or symbols, and explanation thereof is omitted. In the boost converter circuit 30 in FIG. 13, the switching element 5d of the second upper/lower arm 4 is used also as a converter switching element, and the diode 6c of the second upper/lower arm 4 is used also as a converter rectification element. With such an arrangement, since one switching element and one diode can be removed from the switching elements and the diodes when compared with the embodiment of FIG. 10, the present embodiment is effective for its miniaturization. However, since the inverter switching element is used also as a converter switching element, the current of the induction coil becomes pulsative.

As a result, there may occur such a case that the heating-target object produces a whine noise. In such a case, the whine sound can be avoided by narrowing the variable range of an ON time duty of the switching element 5d or by setting the duty to be constant.

Embodiment 6:

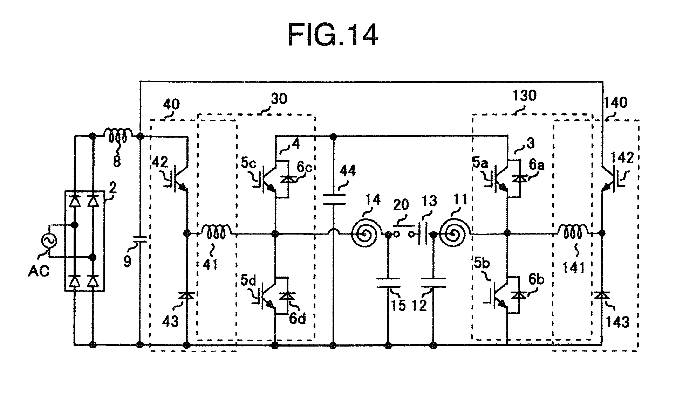

FIG. 14 shows a circuit configuration of an electromagnetic induction heating device in accordance with an embodiment 6. In the drawing, constituent elements having the same functions as those shown in FIG. 13 are denoted by the same reference numerals or symbols, and explanation thereof is omitted. In FIG. 14, the current of the commercial AC power source AC is applied to the diode rectification circuit 2 to be full-wave rectified therein, and then applied via a filter including the inductance 8 and the capacitor 9 to a second H bridge converter including a second buck converter circuit 140 and a boost converter circuit 130. The second buck converter circuit 140 includes an inductor 141, a switching element 142, and a diode 143. Meanwhile, the boost converter circuit 130 includes the inductor 141, the switching element 5b of the upper/lower arm 3, and the diode 6a of the upper/lower arm 3. In other words, the upper/lower arm 3 is used also as the switching element and diode in the boost converter circuit 130. Turning OFF of the switching element 42 in the buck converter circuit 40 causes the input current from the AC power source AC to be cut off and disconnected in the embodiment of FIG. 13. Thus in order to make the AC current continuous, it is necessary to make large the filter including the inductance 8 and the capacitor 9. In the present embodiment, since the second buck converter circuit 140 is newly provided, the filter can be made compact by employing an interleave system of controllably shifting the operational timing with the buck converter circuit 40.

In this connection, when the heating-target object is made of iron, as in the above case, the relay 20 is turned ON, and the full bridge type of inverter including the third resonance load circuit 60 having the first and second upper/lower arms 3, 4 and the induction coils 11, 14 causes high frequency currents to be supplied to the inside and outside induction coils 11, 14 and to heat the heating-target object.

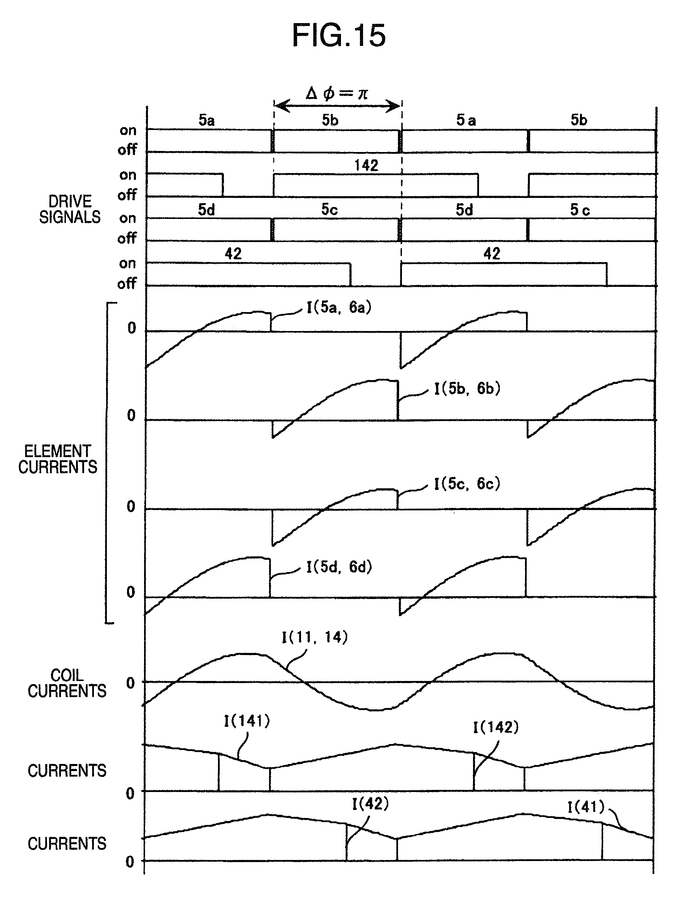

FIG. 15 shows drive signals and currents for respective switching elements, induction coil currents and inductor currents when the heating device is driven as a full bridge type inverter in the present embodiment. In the same drawing, the switching element 5a, 5b of the upper/lower arm 3 are complementarily driven with a predetermined dead time provided therefore, and the switching elements 5c, 5d of the second upper/lower arm 4 are similarly driven complementarily. Since a phase difference of $\pi$ (rad) is provided between the switching element 142 of the upper/lower arm 3 and the switching element 142 of the upper/lower arm 4, a maximum voltage can be applied to the resonance load circuit 60 as inverter operation, such a condition as to simultaneously turn OFF the switching elements 42 and 142 as the converter operation can be lightened, the frequency of the AC current can also be increased, thus enabling miniaturization of the filter.

When the heating-target object is made of copper or aluminum, as in the above case, the relay 20 is turned OFF to drive the first and second arms 3, 4 with a frequency of, e.g., about 90kHz. At this time, when a phase difference of $\pi/2$ (rad) is provided between the upper/lower arms 3 and 4, a phase difference of $\pi/2$ (rad) can be provided between the induction coils 11 and 14. Since a heating-target object made of a nonmagnetic material having a low resistance has a small equivalent resistance and tends to flow therethrough easily, even driving of the upper/lower arm with a frequency lower than the resonance frequency of the resonance load circuit causes the coil current to continuously flow. Thus it is not necessarily required to drive the upper/lower arm according to the resonance frequency.

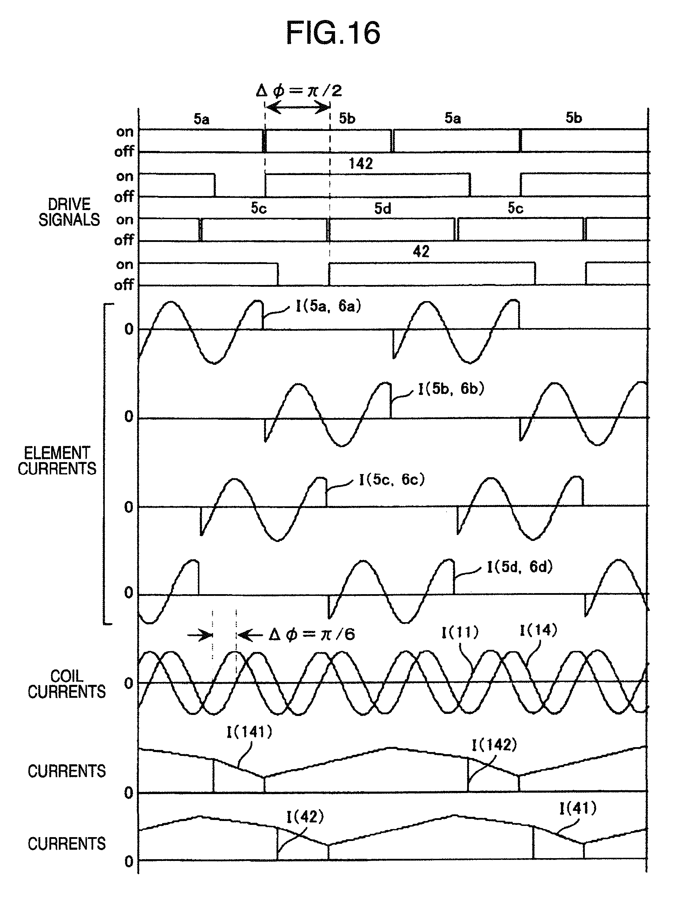

FIG. 16 shows drive signals and currents for each switching element, induction coil currents, and inductor currents when the switching elements 5a to 5d and the switching elements 42, 142 are driven with a frequency reduced to about 1/3 of the resonance frequency. In the same drawing, the switching elements 5a, 5b of the upper/lower arm are complementarily driven with a predetermined dead time, and simultaneously, the switching elements 5c, 5d of the upper/lower arm 4 are complementarily driven similarly. When a phase difference of $\pi/2$ (rad) is provided between the switching element 142 of the upper/lower arm 3 and the switching element 142 of the upper/lower arm 4, a phase difference of $\pi/6$ (rad) can be provided to the induction coils 11, 14 as inverter operation. When a resonance period is $2\pi$, the phase difference $\pi/6$ (rad) is changed to $\pi/2$ (rad), a momentary maximum value of the lift force of the heating-target object can be reduced as in the above case. Thus a lift force or a movement in the heating-target object when receiving this lift force can be suppressed. Since such a condition that the switching elements 42, 142 are simultaneously turned OFF can be reduced as converter operation as mentioned above and the frequency of the AC current can also be increased, the filter can be miniaturized.

As has been mentioned above, when the first and second upper/lower arms are both driven with a frequency lower than the resonance frequency, that is with a frequency corresponding to about 1/a of the resonance frequency(a: a whole number); a switching loss can be reduced.

Embodiment 7:

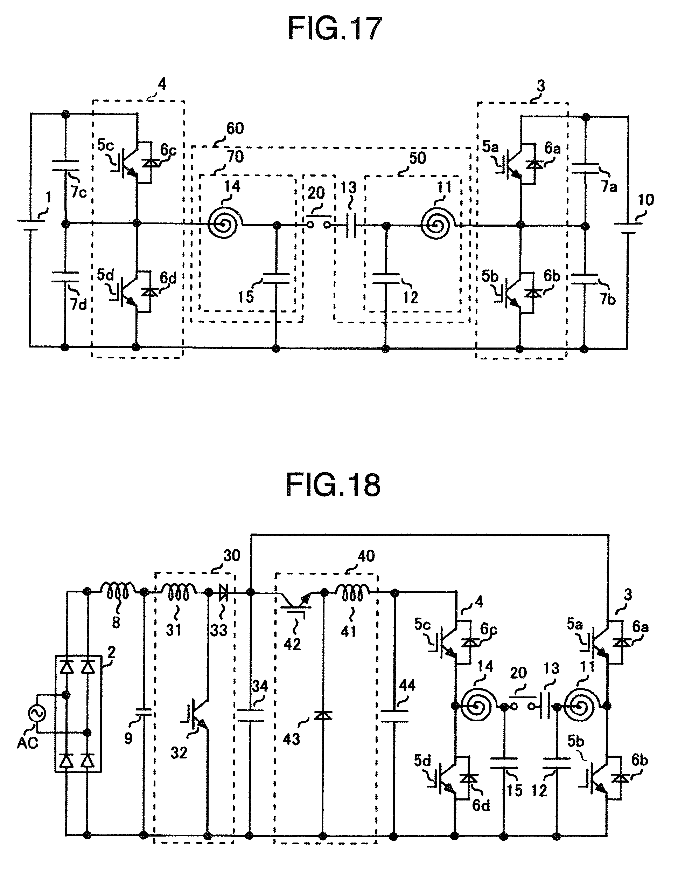

FIG. 17 shows a circuit configuration of an electromagnetic induction heating device in accordance with an embodiment 7. In the same drawing, constituent elements having the same functions as those shown in FIG. 1 are denoted by the same reference numerals or symbols, and explanation thereof is omitted. FIG. 17 is different from FIG. 1 in that the upper/lower arm 4 is connected between the positive and negative electrodes of a DC power source 10. Since arbitrary power voltages can be applied to the upper/lower arms 3, 4 respectively in this way, power control can be attained finely according to the material of the heating-target object or a set heating power.

Embodiment 8:

FIG. 18 shows a circuit configuration of an electromagnetic induction heating device in accordance with an embodiment 8. In the embodiment of FIG. 9, the first and second upper/lower arms are connected between output terminals of the buck converter circuit 40. In the present embodiment, the first upper/lower arm 3 is connected between the output terminals of the boost converter circuit 30. With such an arrangement, when the first upper/lower arm is driven to supply a current to the resonance load circuit, the buck converter circuit 40 is bypassed, whereby the loss of the buck converter circuit 40 can be reduced.

Embodiment 9:

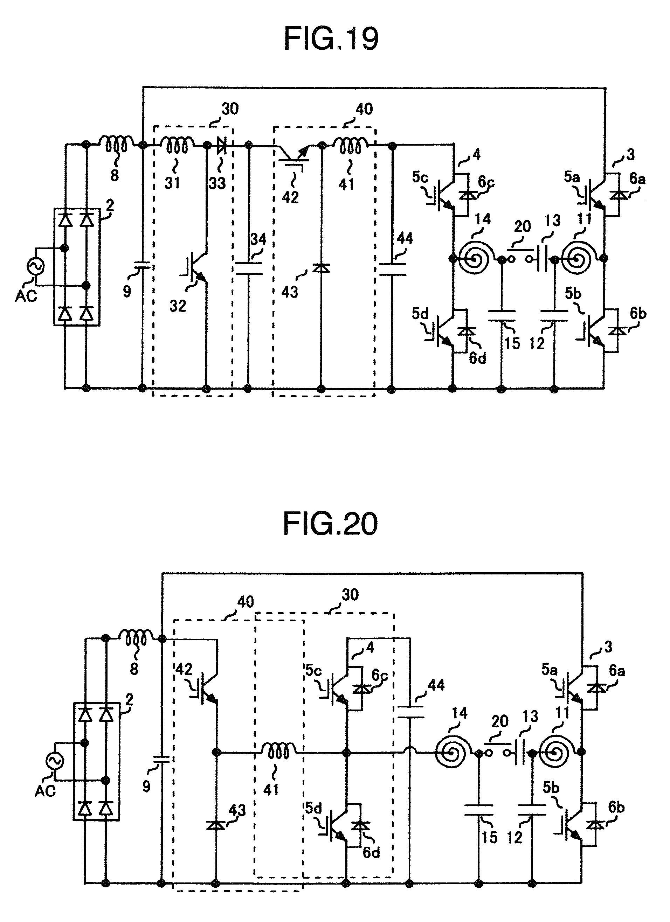

FIG. 19 shows a circuit configuration of an electromagnetic induction heating device in accordance with an embodiment 9. In the embodiment of FIG. 18, the first upper/lower arm 3 is connected between the output terminals of the boost converter circuit 30. In the present embodiment, the upper/lower arm 3 is connected between both ends of the filter capacitor 9. In this case, when the first upper/lower arm is devein to supply a current to the resonance load circuit, the boost converter circuit 30 and the buck converter circuit 40 are bypassed, whereby the losses of the boost converter circuit 30 and the buck converter circuit 40 can be reduced.

Embodiment 10:

FIG. 20 shows a circuit configuration of an electromagnetic induction heating device in accordance with an embodiment 10. In the embodiment of FIG. 10, the first upper/lower arm 3 is connected between the output terminals of the boost converter circuit 30. In the embodiment, the upper/lower arm 3 is connected between both ends of the filter capacitor 9. With such an arrangement, when the first upper/lower arm is driven to supply a current to the resonance load circuit, the buck converter circuit 40 and the boost converter circuit 30 are bypassed, whereby the losses of the buck converter circuit 40 and the boost converter circuit 30 can be reduced.

Features, components and specific details of the structures of the above-described embodiments may be exchanged or combined to form further embodiments optimized for the respective application. As far as those modifications are apparent for an expert skilled in the art they shall be disclosed implicitly by the above description without specifying explicitly every possible combination.

**Claims**

1. An electromagnetic induction heating device including an inverter which has first and second upper/lower arms (3, 4) each having two main switching elements (5a, 5b, 5c, 5d) connected in series and which converts a DC voltage to an AC voltage and supplies the AC voltage to induction coils (11, 14) for inductively heat a heating-target object, the electromagnetic induction heating device comprising:

    first inverter control means for operating the inverter as a half bridge type inverter by driving the switching elements (5a, 5b) of the first upper/lower arm (3);
    second inverter control means for operating the inverter as a half bridge type inverter by driving the switching elements (5c, 5d) of the second upper/lower arm (4);
    third inverter control means for operating the inverter as a full bridge type inverter by driving the switching elements (5a, 5b, 5c, 5d) of the first and second upper/lower arms (3, 4);
    a first resonance load circuit (50) made up of a first induction coil (11) and a first resonance capacitor (12), the first resonance load circuit being connected between output terminals of the half bridge type inverter including the first upper/lower arm; and
    a second resonance load circuit(70) made up of a second induction coil (14) and a second resonance capacitor (15), the second resonance load circuit being connected between output terminals of the half bridge type inverter including the second upper/lower arm;
    the electromagnetic induction heating device being **characterized in that** it further comprises:

    a third resonance load circuit (60) made up of at least part of the first and second resonance load circuits (50, 70) and a third resonance capacitor (13), the third resonance load circuit being connected between output terminals of the full bridge type inverter including the first and second upper/lower arms; and
    switch means (20) for connecting or disconnecting the third resonance load circuit to or from the inverter.

2. The electromagnetic induction heating device according to claim 1, **characterized in that** the first and second induction coils (11, 14) are located on nearly the same plane, and **characterized by** comprising magnetic coupling suppressing means for suppressing magnetic coupling between the induction coils, and driving means for driving the first and second upper/lower arms (3, 4) in such a manner that the currents of the first and second induction coils have a phase difference of $\pi/2$.

3. The electromagnetic induction heating device according to claim 1 or 2, **characterized in that** said first and second induction coils (11, 14) are located inside and outside in the form of concentric circles, said magnetic coupling suppressing means includes U-shaped magnetic materials (51a-51l, 71a-71l) radially located on lower surfaces of the first and second induction coils (11, 14), the magnetic materials have each nearly a constant arc angle to form a circle, said magnetic coupling suppressing means located inside and said magnetic coupling suppressing means located outside are located to be shifted by nearly a constant arc angle, and the outer upright parts of said magnetic coupling suppressing means located inside and the inner upright parts of said magnetic coupling suppressing means located outside are each located at a position spaced by a nearly identical distance from the center of the concentric circle.

4. The electromagnetic induction heating device according to at least one of claims 1 to 3, **characterized in that** said first and second resonance capacitors (12, 15) are smaller in capacitance than said third resonance capacitor (13).

5. The electromagnetic induction heating device according to at least one of claims 1 to 4, **characterized by** comprising a converter circuit for converting a voltage of a DC power source (1) to a DC voltage and applies the converted DC voltage to said inverter.

6. The electromagnetic induction heating device according to claim 5, **characterized in that** said converter circuit includes a boost converter circuit (30) for correcting a power factor while suppressing harmonic components included in an input current of a commercial AC power source and a buck converter circuit (40) for inputting an output of the boost converter circuit and generating an arbitrary DC voltage.

7. The electromagnetic induction heating device according to claim 5, **characterized in that** said converter circuit includes a buck converter circuit (40) for inputting said DC power voltage and a boost converter circuit (30) connected through the buck converter circuit.

8. The electromagnetic induction heating device according to claim 5, **characterized in that** said first upper/lower arm (3) is connected to said DC power source (1), said second upper/lower arm (4) is connected to an output of said converter circuit.

9. The electromagnetic induction heating device according to claim 6, **characterized in that** said first upper/lower arm (3) is connected to an output of the boost converter circuit (30), and said second upper/lower arm (4) is connected to an output of said buck converter circuit (40).

10. The electromagnetic induction heating device according to claim 7, **characterized in that** one of switching elements in the first or second upper/lower arms (3, 4) is used also as a switching element for said boost converter circuit (30).

11. The electromagnetic induction heating device according to claim 7, **characterized in that** said converter circuit includes first and second buck converter circuits (40, 140) and first and second boost converter circuits (30, 130), one of the switching elements in said first upper/lower arm (3) is used also as a switching element for said second boost converter circuit (130), and one of the switching elements in said second upper/lower arm (4) is used also as a switching element for said first boost converter circuit.

12. The electromagnetic induction heating device according to claim 11, **characterized by** comprising driving means for driving the switching elements of said first buck converter circuit (40) and the switching elements in said second buck converter circuit (140) at different timings.

13. The electromagnetic induction heating device according to at least one of claims 1 to 12, **characterized in that** driving frequencies of said first and second upper/lower arms are set to correspond to nearly 1/a of a resonance frequency of said first and second resonance load circuits (50, 70), wherein "a" is a whole number.

**Patentansprüche**

1. Elektromagnetische Induktionsheizvorrichtung, die einen Wechselrichter aufweist, der einen ersten und einen zweiten oberen/unteren Arm (3, 4) besitzt, wobei jeder zwei Hauptschaltelemente (5a, 5b, 5c, 5d) besitzt, die in Reihe geschaltet sind, und der eine Gleichspannung in eine Wechselspannung umsetzt und die Wechselspannung an die Induktionsspulen (11, 14) liefert, um einen Heizzielgegenstand induktiv zu heizen, wobei die elektromagnetische Induktionsheizvorrichtung Folgendes umfasst:

erste Wechselrichtersteuermittel zum Betreiben des Wechselrichters als einen Wechselrichter der Halbbrückenart durch Ansteuern der Schaltelemente (5a, 5b) des ersten oberen/unteren Arms (3);
zweite Wechselrichtersteuermittel zum Betreiben des Wechselrichters als einen Wechselrichter der Halbbrückenart durch Ansteuern der Schaltelemente (5c, 5d) des zweiten oberen/unteren Arms (4);
dritte Wechselrichtersteuermittel zum Betreiben des Wechselrichters als einen Wechselrichter der Vollbrückenart durch Ansteuern der Schaltelemente (5a, 5b, 5c, 5d) des ersten und des zweiten oberen/unteren Arms (3, 4);
eine erste Resonanzlastschaltung (50), die aus einer ersten Induktionsspule (11) und einem ersten Resonanzkondensator (12) aufgebaut ist, wobei die erste Resonanzlastschaltung zwischen die Ausgangsanschlüsse des Wechselrichters der Halbbrückenart, die den ersten oberen/unteren Arm enthält, geschaltet ist, und
eine zweite Resonanzlastschaltung (70), die aus einer zweiten Induktionsspule (14) und einem ersten Resonanzkondensator (15) aufgebaut ist, wobei die zweite Resonanzlastschaltung zwischen die Ausgangsanschlüsse des Wechselrichters der Halbbrückenart, die den zweiten oberen/unteren Arm enthält, geschaltet ist;
wobei die elektromagnetische Induktionsheizvorrichtung **dadurch gekennzeichnet ist, dass** sie ferner Folgendes umfasst:

eine dritte Resonanzlastschaltung (60), die zumindest aus einem Teil der ersten und der zweiten Resonanzlastschaltung (50, 70) und einem dritten Resonanzkondensator (13) aufgebaut ist, wobei die dritte Resonanzlastschaltung zwischen die Anschlüsse des Wechselrichters der Vollbrückenart, die den ersten und den zweiten oberen/unteren Arm enthält, geschaltet ist, und
Schaltmittel (20) zum Verbinden oder Trennen der dritten Resonanzlastschaltung mit oder von dem Wechselrichter.

2. Elektromagnetische Induktionsheizvorrichtung nach Anspruch 1, **dadurch gekennzeichnet, dass** die erste und die zweite Induktionsspule (11, 14) fast auf der gleichen Ebene angeordnet sind, und dadurch, dass sie magnetische Kopplungsunterdrückungsmittel zum Unterdrücken der magnetischen Kopplung zwischen den Induktionsspulen und Ansteuermittel zum Ansteuern des ersten und des zweiten oberen/unteren Arms (3, 4) in der Weise, dass die Ströme der ersten und der zweiten Induktionsspule eine Phasendifferenz von $\pi/2$ haben, umfasst.

3. Elektromagnetische Induktionsheizvorrichtung nach Anspruch 1 oder 2, **dadurch gekennzeichnet, dass** die erste und die zweite Induktionsspule (11, 14) innerhalb und außerhalb in der Gestalt von konzentrischen Kreisen angeordnet sind, die magnetischen Kopplungsunterdrückungsmittel U-förmige magnetische Materiale (51a-511, 71a-711) aufweisen, die auf unteren Oberflächen der ersten und der zweiten Induktionsspule (11, 14) radial angeordnet sind, die magnetischen Materialien jeweils einen konstanten Bogenwinkel haben, um einen Kreis zu bilden, die innerhalb angeordneten magnetischen Kopplungsunterdrückungsmittel und die außerhalb angeordneten magnetischen Kopplungsunterdrückungsmittel angeordnet sind, durch einen fast konstanten Bogenwinkel verschoben zu werden, und die äußeren aufrechten Teile der innerhalb angeordneten magnetischen Kopplungsunterdrückungsmittel und die inneren aufrechten Teile der außerhalb angeordneten magnetischen Kopplungsunterdrückungsmittel jeweils an einer Position angeordnet sind, die in einem fast identischen Abstand zum Mittelpunkt der konzentrischen Kreise verteilt ist.

4. Elektromagnetische Induktionsheizvorrichtung nach mindestens einem der Ansprüche 1 bis 3, **dadurch gekennzeichnet, dass** der erste und der zweite Resonanzkondensator (12, 15) eine kleinere Kapazität haben als der dritte Resonanzkondensator (13).

5. Elektromagnetische Induktionsheizvorrichtung nach mindestens einem der Ansprüche 1 bis 4, **dadurch gekennzeichnet dass** sie eine Umsetzerschaltung zum Umsetzen einer Spannung einer Gleichstromleistungsquelle (1) in eine Gleichspannung und Anlegen der umgesetzten Gleichspannung an den Wechselrichter umfasst.

6. Elektromagnetische Induktionsheizvorrichtung nach Anspruch 5, **dadurch gekennzeichnet, dass** die Umsetzerschaltung eine Hochsetz-Umsetzerschaltung (30) zum Berichtigen eines Leistungsfaktors, während die harmonischen Komponenten, die in einem Eingangsstrom einer gängigen Wechselstromleistungsquelle enthalten sind, unterdrückt werden, und eine Tiefsetz-Umsetzerschaltung (40) zum Eingeben eines Ausgangs der Hochsetz-Umsetzerschaltung und Erzeugen einer beliebigen Gleichspannung aufweist.

7. Elektromagnetische Induktionsheizvorrichtung nach Anspruch 5, **dadurch gekennzeichnet, dass** die Umsetzerschaltung eine Tiefsetz-Umsetzerschaltung (40) zum Eingeben der Gleichstromleistungsspannung und eine Hochsetz-Umsetzerschaltung (30), die über die Tiefsetz-Umsetzerschaltung angeschlossen ist, aufweist.

8. Elektromagnetische Induktionsheizvorrichtung nach Anspruch 5, **dadurch gekennzeichnet, dass** der erste obere/untere Arm (3) mit der Gleichstromleistungsquelle (1) verbunden ist und der zweite obere/untere Arm (4) mit einem Ausgang der Umsetzerschaltung verbunden ist.

9. Elektromagnetische Induktionsheizvorrichtung nach Anspruch 6, **dadurch gekennzeichnet, dass** der erste obere/untere Arm (3) mit einem Ausgang der Hochsetz-Umsetzerschaltung (30) verbunden ist und der zweite obere/untere Arm (4) mit einem Ausgang der Tiefsetz-Umsetzerschaltung (40) verbunden ist.

10. Elektromagnetische Induktionsheizvorrichtung nach Anspruch 7, **dadurch gekennzeichnet, dass** eines der Schaltelemente in dem ersten oder dem zweiten oberen/unteren Arm (3, 4) auch als ein Schaltelement für die Hochsetz-Umsetzerschaltung (30) verwendet wird.

11. Elektromagnetische Induktionsheizvorrichtung nach Anspruch 7, **dadurch gekennzeichnet, dass** die Umsetzerschaltung eine erste und eine zweite Tiefsetz-Umsetzerschaltung (40, 140) und eine erste und eine zweite Hochsetz-Umsetzerschaltung (30, 130) aufweist, eines der Schaltelemente in dem ersten oberen/unteren Arm (3) auch als ein Schaltelement für die zweite Hochsetz-Umsetzerschaltung (130) verwendet wird und eines der Schaltelemente in dem zweiten oberen/unteren Arm (4) auch als ein Schaltelement für die erste Hochsetz-Umsetzerschaltung verwendet wird.

12. Elektromagnetische Induktionsheizvorrichtung nach Anspruch 11, **dadurch gekennzeichnet, dass** sie Ansteuermittel zum Ansteuern der Schaltelemente der ersten Tiefsetz-Umsetzerschaltung (40) und der Schaltungselemente in der zweiten Tiefsetz-Umsetzerschaltung (140) bei unterschiedlichen Zeitvorgaben umfasst.

13. Elektromagnetische Induktionsheizvorrichtung nach mindestens einem der Ansprüche 1 bis 12, **dadurch gekennzeichnet, dass** die Ansteuerfrequenzen des ersten und des zweiten oberen/unteren Arms so eingestellt sind, dass sie fast 1/a einer Resonanzfrequenz der ersten und der zweiten Resonanzlastschaltung (50, 70) entsprechen, wobei "a" eine ganze Zahl ist.

## Revendications

1. Dispositif de chauffage par induction électromagnétique incluant un inverseur qui comprend des première et seconde branches supérieure/inférieure (3, 4), ayant chacune deux éléments de commutation principaux (5a, 5b, 5c, 5d) connectés en série, et qui convertit un voltage en courant continu en un voltage en courant alternatif et qui alimente le voltage en courant alternatif à des bobines d'induction (11, 14) pour chauffer par induction un objet cible à chauffer, le dispositif de chauffage par induction électromagnétique comprenant :

   un premier moyen de commande d'inverseur pour faire fonctionner l'inverseur comme un inverseur de type à demi-pont en pilotant les éléments de commutation (5a, 5b) de la première branche supérieure/inférieure (3) ;
   un second moyen de commande d'inverseur pour faire fonctionner l'inverseur comme un inverseur de type à demi-pont en pilotant les éléments de commutation (5c, 5d) de la seconde branche supérieure/inférieure (4) ;
   un troisième moyen de commande d'inverseur pour faire fonctionner l'inverseur comme un inverseur de type à pont entier en pilotant les éléments de commutation (5a, 5b, 5c, 5d) de la première et de la seconde branche supérieure/inférieure (3, 4) ;
   un premier circuit de charge à résonance (50) constitué d'une première bobine d'induction (11) et d'une première capacité de résonance (12), le premier circuit de charge à résonance étant connecté entre des bornes de sortie de l'inverseur de type à demi-pont incluant la première branche supérieure/inférieure ; et
   un second circuit de charge à résonance (70) constitué d'une seconde bobine d'induction (14) et d'une seconde capacité de résonance (15), le second circuit de charge à résonance étant connecté entre des bornes de sortie de l'inverseur de type à demi-pont incluant la seconde branche supérieure/inférieure ;
   le dispositif de chauffage par induction électromagnétique étant **caractérisé en ce qu'**il comprend en outre :

      un troisième circuit de charge à résonance (60) constitué d'au moins une partie du premier et du second circuit de charge à résonance (50, 70) et d'une troisième capacité de résonance (13), le troisième circuit de charge à résonance étant connecté entre des bornes de sortie de l'inverseur de type à pont entier incluant la première et la seconde branche supérieure/inférieure ; et
      un moyen de commutation (20) pour connecter ou déconnecter le troisième circuit de charge à résonance à l'inverseur ou de celui-ci.

**2.** Dispositif de chauffage par induction électromagnétique selon la revendication 1, **caractérisé en ce que** la première et la seconde bobine à induction (11, 14) sont situées pratiquement sur le même plan, et **caractérisé en ce qu'**il comprend des moyens de suppression de couplage magnétique pour supprimer un couplage magnétique entre les bobines d'induction, et

un moyen de pilotage pour piloter la première et la seconde branche supérieure/inférieure (3, 4) d'une manière telle que les courants de la première et de la seconde bobine d'induction ont une différence de phase de $\pi/2$.

**3.** Dispositif de chauffage par induction électromagnétique selon la revendication 1 ou 2, **caractérisé en ce que** ladite première et ladite seconde bobine d'induction (11, 14) sont situées à l'intérieur et à l'extérieur sous la forme de cercles concentriques, lesdits moyens de suppression de couplage magnétique incluent des matériaux magnétiques en forme de U (51a-511, 71a-711), situés radialement sur des surfaces inférieures de la première et de la seconde bobine d'induction (11, 14) les matériaux magnétiques présentant chacun pratiquement un angle d'arc constant pour former un cercle, lesdits moyens de suppression de couplage magnétique situés à l'intérieur et lesdits moyens de suppression de couplage magnétique situés à l'extérieur sont situés de manière à être décalés d'un angle d'arc pratiquement constant, et les parties dressées extérieures desdits moyens de suppression de couplage magnétique situés à l'intérieur et les parties dressées extérieures desdits moyens de suppression de couplage magnétique situés à l'extérieur sont situées chacune à une position écartée d'une distance pratiquement identique depuis le centre du cercle concentrique.

**4.** Dispositif de chauffage par induction électromagnétique selon l'une au moins des revendications 1 à 3, **caractérisé en ce que** ladite première et ladite seconde capacité de résonance (12, 15) ont une capacité plus petite que ladite troisième capacité de résonance (13).

**5.** Dispositif de chauffage par induction électromagnétique selon l'une au moins des revendications 1 à 4, **caractérisé en ce qu'**il comprend un circuit convertisseur pour convertir un voltage d'une source de puissance à courant continu (1) en un voltage à courant continu et appliquer le voltage à courant continu converti audit inverseur.

**6.** Dispositif de chauffage par induction électromagnétique selon la revendication 5, **caractérisé en ce que** ledit circuit convertisseur inclut un circuit convertisseur amplificateur (30) pour corriger un facteur de puissance tout en supprimant des composantes harmoniques incluses dans un courant injecté d'une source de puissance à courant alternatif du commerce et un circuit convertisseur abaisseur (40) pour injecter une sortie du circuit convertisseur amplificateur et générer un voltage à courant continu arbitraire.

**7.** Dispositif de chauffage par induction électromagnétique selon la revendication 5, **caractérisé en ce que** ledit circuit convertisseur inclut un circuit convertisseur abaisseur (40) pour injecter ledit voltage de puissance à courant continu et un circuit convertisseur amplificateur (30) connecté via le circuit convertisseur abaisseur.

**8.** Dispositif de chauffage par induction électromagnétique selon la revendication 5, **caractérisé en ce que** ladite première branche supérieure/inférieure (3) est connectée à ladite source de puissance à courant continu (1), et ladite seconde branche supérieure/inférieure (4) est connectée à une sortie dudit circuit convertisseur.

**9.** Dispositif de chauffage par induction électromagnétique selon la revendication 6, **caractérisé en ce que** ladite première branche supérieure/inférieure (3) est connectée à une sortie du circuit convertisseur amplificateur (30), et ladite seconde branche supérieure/inférieure (4) est connectée à une sortie dudit circuit convertisseur abaisseur (40).

**10.** Dispositif de chauffage par induction électromagnétique selon la revendication 7, **caractérisé en ce que** l'un des éléments de commutation dans la première ou la seconde branche supérieure/inférieure (3, 4) est utilisé également à titre d'élément de commutation pour ledit circuit convertisseur amplificateur (30).

**11.** Dispositif de chauffage par induction électromagnétique selon la revendication 7, **caractérisé en ce que** ledit circuit convertisseur inclut un premier et un second circuit convertisseur abaisseur (40, 140) et un premier et un second circuit convertisseur amplificateur (30, 130), l'un des éléments de commutation dans ladite première branche supérieure/inférieure (3) est utilisé également à titre d'élément de commutation pour ledit second circuit convertisseur amplificateur (130), et l'un des éléments de commutation dans ladite seconde branche supérieure/inférieure (4) est utilisé également à titre d'élément de commutation pour ledit premier circuit convertisseur amplificateur.

**12.** Dispositif de chauffage par induction électromagnétique selon la revendication 11, **caractérisé en ce qu'**il comprend un moyen de pilotage pour piloter les éléments de commutation dudit premier circuit convertisseur abaisseur (40) et les éléments de commutation dudit circuit convertisseur abaisseur (140) à des temporisations différentes.

13. Dispositif de chauffage par induction électromagnétique selon l'une au moins des revendications 1 à 12, **caractérisé en ce que** les fréquences de pilotage de ladite première et ladite seconde branche supérieure/inférieure sont fixées pour correspondre pratiquement à 1/a d'une fréquence de résonance dudit premier et dudit second circuit de charge à résonance (50, 70), où "a" est un nombre entier.

# FIG.1

# FIG.2

# FIG.3

# FIG.4

COIL
CURRENT

I(11, 14)

0

EDDY CURRENT
LOSS OF
HEATING-TARGET
OBJECT

1

0

LIFT FORCE
ACTING ON
HEATING-TARGET
OBJECT

1

0

# FIG.5

COIL CURRENT

I(11)  I(14)

0

$\Delta\phi = \pi/2$

EDDY CURRENT LOSS OF HEATING-TARGET OBJECT

1

0

LIFT FORCE ACTING ON HEATING-TARGET OBJECT

1

0.75

0

# FIG.6

# FIG.7

# FIG.8

# FIG.9

# FIG.10

INPUT VOLTAGE
DETECTION
CIRCUIT

DRIVE CIRCUIT

AC CURRENT
DETECTION
CIRCUIT

INPUT CURRENT
DETECTION
CIRCUIT

INV VOLTAGE
DETECTION
CIRCUIT

COIL CURRENT
DETECTION
CIRCUIT

CONTROL CIRCUIT

INPUT POWER
SETTER

# FIG.11

COMMERCIAL PERIOD

V2    V44

0

32  0

42  0

BUCK MODE    BOOST MODE    BUCK MODE

# FIG.12

# FIG.13

# FIG.14

# FIG.15

# FIG.16

# FIG.17

# FIG.18

# FIG.19

# FIG.20

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007012482 A
- JP 2004165127 A
- JP 2004273301 A

- JP 2007194228 A
- JP 2007289306 A
- JP 2007317587 A